# EUROPÄISCHE PATENTSCHRIFT

(11) **EP 2 233 260 B1**
(45) Veröffentlichungstag und Bekanntmachung des Hinweises auf die Patenterteilung: **15.07.2015**
(21) Anmeldenummer: 10450049.1
(22) Anmeldetag: 26.03.2010
(51) Int. Cl.: B27L 11/00, B02C 13/06, B02C 18/14, B02C 18/18, B23C 5/04, B23C 5/26

(54) **Vorrichtung zum Zerkleinern von Holz**
Device for comminuting wood
Dispositif de broyage de bois

(30) Priorität: 27.03.2009 AT 4932009; 05.06.2009 AT 3472009
(43) Veröffentlichungstag der Anmeldung: 29.09.2010
(73) Patentinhaber: Eschlböck Maschinenbau GmbH, 4731 Prambachkirchen (AT)
(72) Erfinder: Eschlböck, Rudolf, 4731 Prambachkirchen (AT)
(74) Vertreter: Patentanwaltskanzlei Hübscher

(56) Entgegenhaltungen:
- WO-A1-2009/040490
- WO-A2-2008/140954
- AT-U1- 11 069
- CA-A1- 2 597 973
- DE-U1-202009 001 065
- US-A- 4 171 778
- US-A- 4 697 626
- US-A- 5 005 620
- US-A1- 2007 251 601

## Beschreibung

Die Erfindung betrifft Vorrichtung zum Zerkleinern von Holz mit einem Rotor mit wenigstens zwei in Rotorachsrichtung beabstandeten und koaxial zueinander angeordneten Rotorscheiben, wobei zwischen je zwei Rotorscheiben wenigstens ein lösbar an den Rotorscheiben befestigter Messerträger vorgesehen ist, auf dem wiederum wenigstens ein Messer lösbar angeordnet ist, wobei der Messerträger auf umfangsseitig auf den Rotorscheiben vorgesehenen Aufnahmen aufruht und mit einer quer zur Aufnahme ausgerichteten Befestigung, vorzugsweise Schrauben, lösbar an den Rotorscheiben befestigt ist und die auf dem Messerträger angeordneten Messer die Befestigung des Messerträgers zumindest teilweise überdecken, wobei die Messerträger ebenso wie die Messer zumindest annähernd eine den äußeren Abstand zwischen zwei benachbarten Rotorscheiben entsprechende Breite aufweisen.

Eine gattungsgemäße Vorrichtung offenbart beispielsweise die US 2007/251601 A1. Vorrichtungen zum Zerkleinern von Holz sind üblicherweise in einem Gehäuse angeordnet und werden mittels eines Drehantriebes angetrieben. Das zu zerkleinernde Holz, insbesondere Äste oder Baumstämme, werden dem Rotor gegebenenfalls mit einer gesonderten Vorschubeinrichtung zugeführt, vom Rotor zerkleinert und das zerkleinerte Holz anschließend mit einem Gebläse in ein Lager oder Zwischenlager weiterverfrachtet. Bei der bekannten Vorrichtung (EP 1 413 410 A2) sind die Messerträger mit den Rotorscheiben derart verschraubt, dass die Messerträger insbesondere in Nuten zwischen den Scheiben eingesetzt sind und die Messerträger zudem in achsparalleler Richtung verschraubt sind. Ein wesentlicher Nachteil dieser Vorrichtung liegt darin, dass zwar ein einfacher Austausch der Messer, allerdings nicht der Messerträger möglich ist, da der Rotor zu diesem Zweck zerlegt werden müsste. Aufgrund der hohen Beanspruchung der Messerträger durch die massiven Schlagkräfte kommt es allerdings gelegentlich unweigerlich zu einer Beschädigung der Messerträger.

Eine weitere derartige Vorrichtung ist aus der US 5 819 825 A bekannt, gemäß der die Messer mit Bolzen gesichert sind, welche Bolzen einerseits die Rotorscheiben und anderseits Messeraufnahmen achsparallel durchragen. Zum Austausch einzelner Messer muss je wiederum der gesamte Rotor ausgebaut und zerlegt werden.

Ausgehend von einem Stand der Technik der eingangs geschilderten Art liegt der Erfindung die Aufgabe zugrunde eine Vorrichtung zur Zerkleinerung von Holz zu schaffen, die im Schadensfall eine rasche Reparatur von Messer bzw. Messerträgern ermöglicht und dabei einen sicheren Halt der Messerträger an den Rotorscheiben gewährleistet.

Die Erfindung löst diese Aufgabe mit einer Vorrichtung mit den Merkmalen des Anspruchs 1.

Ein wesentlicher Vorteil der Erfindung liegt darin, dass sämtliche Befestigungselemente radial zugänglich sind und Messer sowie Messerträger somit gegebenenfalls rasch und unkompliziert gewechselt werden können. Dazu sind lediglich die Messer, nach einem Lösen deren Befestigung, von dem Messerträger abzunehmen, wonach die Befestigungsmittel für den Messerträger zugänglich sind und ebenfalls gelöst werden können. Dadurch dass die auf den Messerträgern angeordneten Messer die Befestigung bzw. Befestigungsmittel des Messerträgers zumindest teilweise überdecken, also insbesondere beispielsweise die versenkt im Messerträger angeordneten Schraubenköpfe überdecken, ist sichergestellt, dass sich die Befestigung des Messerträgers nicht ungewollt lösen kann, was insbesondere durch die massiven, auf Messer und Messerträger einwirkenden Schläge durch das zu hackende Holz stets der Fall sein kann. Ein ungewolltes Lösen des Messerträgers von den Rotorscheiben ist somit nicht mehr zu befürchten. Die lösbare Verbindung des Messerträgers mit den Rotorscheiben hat auch den Vorteil, dass der Werkstoff des Messerträgers aus einem höherfesten, damit aber nicht mehr schweißbaren Material hergestellt werden kann.

Die Befestigungsmittel umfassen mit Gewinden ausgestattete Sacklöcher in den Rotorscheiben, in welche die Schrauben eingreifen. Infolge der Einwirkung übermäßiger Schläge auf Messer und Messerträger kann es naturgemäß dennoch zu einem Bruch der Befestigung, insbesondere der Schrauben und somit zu einem Ablösen des Messerträgers kommen. Um die dabei in den Rotorscheiben verbleibenden Befestigungsreste, beispielsweise Schraubenreste, dennoch rasch und einfach entfernen zu können, wird gemäß der Erfindung vorgeschlagen, dass die Rotorscheibe mit quer zur Schraubenachse ausgerichteten und die Sacklöcher durchbrechenden Ausnehmungen versehen ist, in welche Ausnehmungen Schraubenmuttern, vorzugsweise mit zylindrischer Grundform oder mit rechteckiger Grundform mit gerundeten Kanten, lösbar eingesetzt sind. Im einfachsten Fall könnten aber auch handelsübliche Muttern verwendet werden. Diese Schraubenmuttern können im Bedarfsfall problemlos ausgebohrt und durch neue ersetzt werden. Da diese Schraubenmuttern das Aufnahmegewinde aufnehmen, ist somit nicht zu befürchten, dass das Aufnahmegewinde durch ein Entfernen der Restmittel beschädigt wird. Weisen diese Schraubenmuttern zudem eine zylindrische Grundform auf, wobei quer zu dieser Zylinderachsrichtung eine den Zylinder durchbrechende Bohrung mit einem Gewinde vorgesehen ist, welches die Schraube für den Messerträger aufnimmt, ist einerseits ein sicherer Halt der Schrauben gewährleistet und anderseits sichergestellt, dass verschlissene Gewinde in einfacher Weise ausgetauscht werden können.

Eine noch weiter erhöhte Sicherheit gegen ein Abschlagen der Messerträger durch das Hackgut kann dann erzielt werden, wenn die Rotorscheibenaufnahme rückseitig eine einen rückwärtigen Anschlag für den Messerträger ausbildende Schulter aufweist. Der Messerträger stützt sich somit in seiner Montagelage am Anschlag rückwärtig auf der von den Rotorscheiben ausgebildeten Schulter ab. Das bedeutet, dass Schlagkräfte nicht von der Verschraubung bzw. Befestigung aufgenommen werden müssen, sondern über die Rotorscheiben abgetragen werden können.

Überdecken die auf den Messerträgern angeordneten Messer die Befestigung des Messerträgers vollständig, so ist in einfacher Weise dafür gesorgt, dass die gesamte Rotorbreite zum Zerkleinern von Holz genutzt werden kann. Dies ist ja bei den aus dem Stand der Technik bekannten Vorrichtungen, gemäß denen Messerträger und Messer zwischen die Rotorscheiben eingesetzt sind, nicht möglich. Sind zudem mehrere in Rotorachsrichtung nebeneinander angeordnete Rotorstufen, also wenigstens drei Rotorscheiben vorgesehen, an denen je gesonderte Messerträger und Messer befestigt sind, wobei Messer benachbarter Rotorstufen insbesondere in Rotordrehrichtung zueinander versetzt angeordnet sind, ergibt sich durch diese erfindungsgemäße Anordnung der Messer und Messerträger eine Überdeckung der benachbarten Segmenten zugeordneten Messer, wodurch eine verbesserte Zerspanung des zu zerkleinernden Holzes gewährleistet ist.

Um die einzelnen Messer nicht unnötig mit von den in Drehrichtung voreilenden Messern abgeschlagenem Hackgut zu belasten und somit ein sauberes Hackergebnis gewährleisten zu können, empfiehlt es sich zwischen die Rotorscheiben zusätzlich als Gebläseschaufeln wirkende, gegebenenfalls mit Schlageisen ausgestattete, Räumleisten einzusetzen. Diese Räumleisten sind mit einem entsprechenden Drehwinkelversatz zwischen je zwei Messerträgern und Messer eingesetzt und wirken nicht nur als Räumleisten, sondern gegebenenfalls auch als Gebläsestufen bzw. sorgen diese Räumleisten dafür, dass das abgehackte Gut einer nachgeschalteten Gebläsestufe ordnungsgemäß zugeführt wird. Um den Verschleiß an den Rotorscheiben zu vermindern sind die Räumleisten mit in Rotorachsrichtung anschließenden Messerträgern vorzugsweise fluchtend anzuordnen.

Grundsätzlich ist es bei derartigen Rotoren bekannt nur die äußeren beiden Rotorscheiben über je einen Klemmkeil-Spannsatz mit der Antriebswelle zu verbinden. Um die mechanische Belastung des Rotors in Folge von Verdrehungen um die Rotorachse zu verringern empfiehlt es sich alle Rotorscheiben über je einen Klemmkeil-Spannsatz auf einer Antriebswelle drehfest zu halten. Der wesentliche Vorteil dieser Klemmkeilspannsätze liegt darin, dass diese ein vorgebbares Drehmoment aufweisen und übermäßige Schläge zwischen Messern und Antrieb somit abtragen können, wobei sie als eine Art Rutschkupplung wirken. Derartige Klemmkeilspannsätze bzw. derartige Konusspannsätze sorgen für eine Klemmverbindung zwischen einer Nabe und im vorliegenden Fall zwischen der Nabe der Rotorscheiben und einer Antriebswelle. Diese Konusspannsätze umfassen dabei beispielsweise je wenigstens zwei Konusringe mit einander entgegengesetzte Konen, die in axialer Richtung mittels einer Spanneinrichtung gegeneinander aufziehbar sind.

Besonders vorteilhafte Konstruktionsverhältnisse ergeben sich, wenn die zwischen je zwei Rotorscheiben angeordneten Messerträger und Messer pfeilförmig auf dem Rotorumfangsmantel angeordnet sind und die im Bereich der mittleren Rotorscheiben vorgesehene Pfeilspitze in Rotordrehrichtung nacheilend ist. Dadurch dass die im Bereich der mittleren Rotorscheiben vorgesehene Pfeilspitze gegen die Rotordrehrichtung gerichtet ist, wird ein das zu zerkleinernde Holz stets in Richtung der Pfeilspitze zentrierender Vorschub geschaffen und ein übermäßiges Herumschwingen des Hackgutes im Einzugsbereich vermieden. Durch diese Maßnahme ergeben sich saubere Schnitte und ein ruhigerer Lauf der Vorrichtung. Die Messerträger und Messer sind dabei am Rotorumfangsmantel mit in Umfangsrichtung ausgerichteten Messerschneiden vorgesehen, wobei sich die pfeilförmige Anordnung durch einen Versatz benachbarter Messerträger und Messer um die Rotorachse ergibt. Dies wird insbesondere dadurch erreicht, dass die zu dem im Bereich der mittleren Rotorscheiben angeordneten Messerträger und Messer benachbarten Messerträger und Messer um je einen vorgegebenen Winkel voreilend an den Rotorscheiben befestigt sind.

Im einfachsten Fall sind dazu wenigstens fünf Messerträger zwischen wenigstens sechs Rotorscheiben vorgesehen. Dadurch kann mit geringem Bauaufwand ein erfindungsgemäß sauberer Schnitt erzielt werden. Natürlich kann die Rotorscheiben- und auch die Messerträgeranzahl beliebig erweitert werden. Insbesondere kann es von Vorteil sein, wenn am Rotorumfangsmantel wenigstens zwei in Rotorumfangsrichtung versetzt angeordnete pfeilförmige Reihen an Messerträgern und Messern vorgesehen sind. Damit lassen sich symmetrische und leicht auswuchtbare Verhältnisse für den Rotor schaffen. Zudem wird damit die Hackleistung erhöht.

Überdecken die auf dem Messerträger angeordneten Messer die Befestigung des Messerträgers vollständig, so ist in einfacher Weise dafür gesorgt, dass die gesamte Rotorbreite zum Zerkleinern von Holz genutzt werden kann. Da in Rotorachsrichtung zudem nebeneinander mehrere Rotorstufen vorgesehen sind, an denen je gesonderte Messerträger und Messer befestigt sind, wobei die in Rotordrehrichtung zueinander versetzt angeordneten Messer benachbarter Rotorstufen sind, ergibt sich durch diese erfindungsgemäße Anordnung der Messer und Messerträger eine Überdeckung der benachbarten Segmenten zugeordneter Messer, wodurch eine weitere Verbesserung der Zerspanung des zu zerkleinernden Holzes gewährleistet ist. Damit wird ein sauberer, quasi ziehender Schnitt geschaffen, der das Hackgut, insbesondere Baustämme oder dgl., stets zum Rotorzentrum, in Richtung zur Pfeilspitze hin, befördert.

Um symmetrische Messer verwenden zu können, die in axialer Richtung keine zu weiten seitlichen Überstände von den Befestigungspunkten an den Messerträgern aufweisen, empfiehlt es sich, wenn die Messerträger in wenigstens von Aufnahmen und Schultern aufgespannte axiale Durchbrechungen in den Rotorscheiben eingreifen, in welche Durchbrechungen in axialer Richtung an die Messerträger anschließende Distanzplatten mit einer der Durchbrechung zumindest im wesentlichen entsprechenden Umfangsgeometrie eingesetzt sind, wobei die Distanzplatten eine gegenüber den Rotorscheiben, vorzugsweise um wenigstens die Hälfte, geringere Dicke aufweisen. Dadurch ist gewährleistet, dass sich die Messer benachbarter Stufen überdecken, bzw. diese Messer in Achsrichtung nahtlos aneinander anschließen. Da die Distanzplatten mit einer der Durchbrechung zumindest im Wesentlichen entsprechenden Umfangsgeometrie in die Durchbrechung eingesetzt sind, ist die Kreisgeometrie der Rotorscheiben in axialer Ansicht nicht oder nur kaum gestört. Die Scheibenumfangsfläche bildet dann einen über den Scheibenumfange geschlossenen Anschlag für das Hackgut. Bei einem etwaigen Verschleiß der Distanzplatten können diese zudem leicht gewechselt werden.

Ein ordentlicher Halt von Schlagleisten und Distanzplatten an den Rotorscheiben kann insbesondere dann gewährleistet werden, wenn die Räumleisten auf Anschlagelementen aufruhen, die auf der einem benachbarten Messerträger abgewandten Scheibenfläche an der jeweiligen Rotorscheibe angeordnet sind, wobei das jeweilige Anschlagelement vorzugsweise zumindest einen Teil der daran anliegenden Distanzplatte und einen Teil der daran anliegenden Scheibenfläche überdeckt. Besagte Teile können vorzugsweise miteinander verschraubt oder aber verschweißt bzw. verlötet sein. Die Verwendung von Distanzplatten und Anschlagelementen ist nicht auf die Verwendung an Vorrichtungen der vorliegenden Art beschränkt. Vielmehr können diese Elemente auch an Vorrichtungen gemäß dem Stand der Technik Verwendung finden.

Mit diesen Maßnahmen wird zudem eine einfach vollständig in ihre Einzelteile zerlegbare erfindungsgemäße Vorrichtung geschaffen, bei der verschlissene Teile rasch und unkompliziert getauscht werden können.

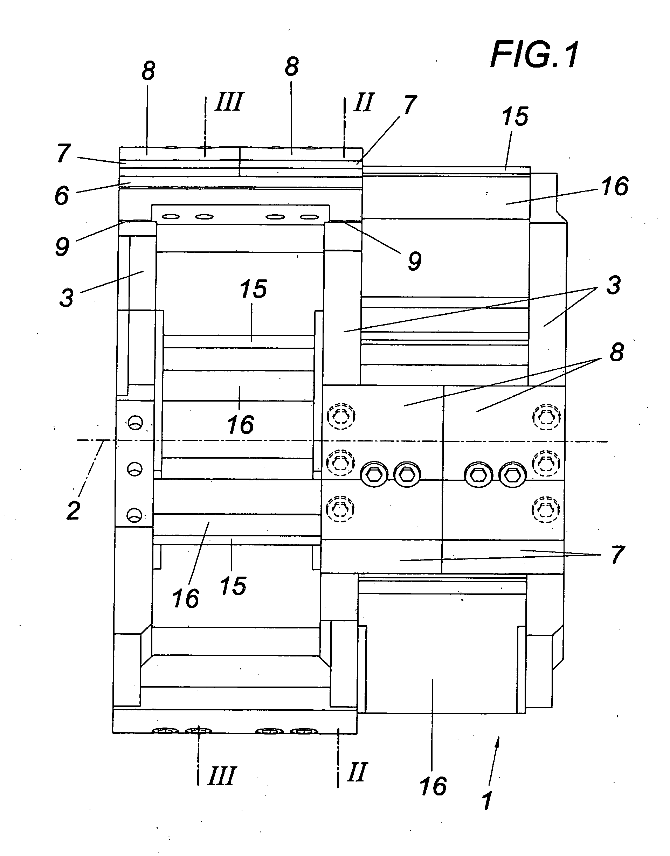

In der Zeichnung ist die Erfindung anhand eines Ausführungsbeispiels schematisch dargestellt. Es zeigen
- Fig. 1: eine erfindungsgemäße Vorrichtung in Ansicht,
- Fig. 2: die Vorrichtung aus Fig. 1 im Schnitt nach der Linie II-II,
- Fig. 3: die Vorrichtung aus Fig. 1 im Schnitt nach der Linie III-III und
- Fig. 4: einen Spannsatz zur Befestigung der erfindungsgemäßen Vorrichtung auf einer Antriebswelle.
- Fig. 5: eine erfindungsgemäße Vorrichtung in Schrägansicht,
- Fig. 6: eine Konstruktionsvariante der erfindungsgemäße Vorrichtung in Ansicht und
- Fig. 7: die Vorrichtung aus Fig. 6 in Seitenansicht und
- Fig. 8: die Vorrichtung aus Fig. 6 und 7 in Explosionsdarstellung.

Eine Vorrichtung zum Zerkleinern von Holz umfasst einen Rotor 1 mit drei in Rotorachsrichtung 2 beabstandet und koaxial zueinander angeordneten Rotorscheiben 3. Diese Rotorscheiben 3 weisen im Bereich der Rotorachse 2 eine Nabe 4 zum Befestigen der Rotorscheiben 3 an einer Antriebswelle 5 auf. Zwischen je zwei Rotorscheiben 3 sind lösbar an den Rotorscheiben 3 befestigte Messerträger 6 vorgesehen, auf denen wiederum je wenigstens ein Messer 7 lösbar angeordnet ist. Das Messer 7 wird zwischen Messerträger 6 und einem Messerhalter 8 geklemmt. Sowohl die Klemmung der Messer 7 zwischen Messerträger 6 und Messerhalter 8 als auch die Befestigung des Messerträgers 6 an die Rotorscheiben 3 erfolgt mittels Schraubverbindungen.

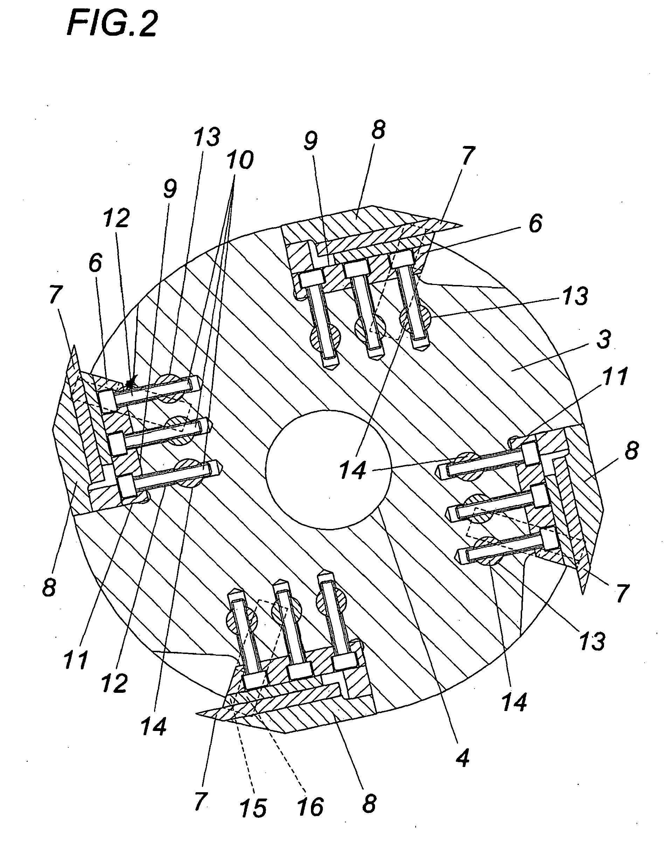

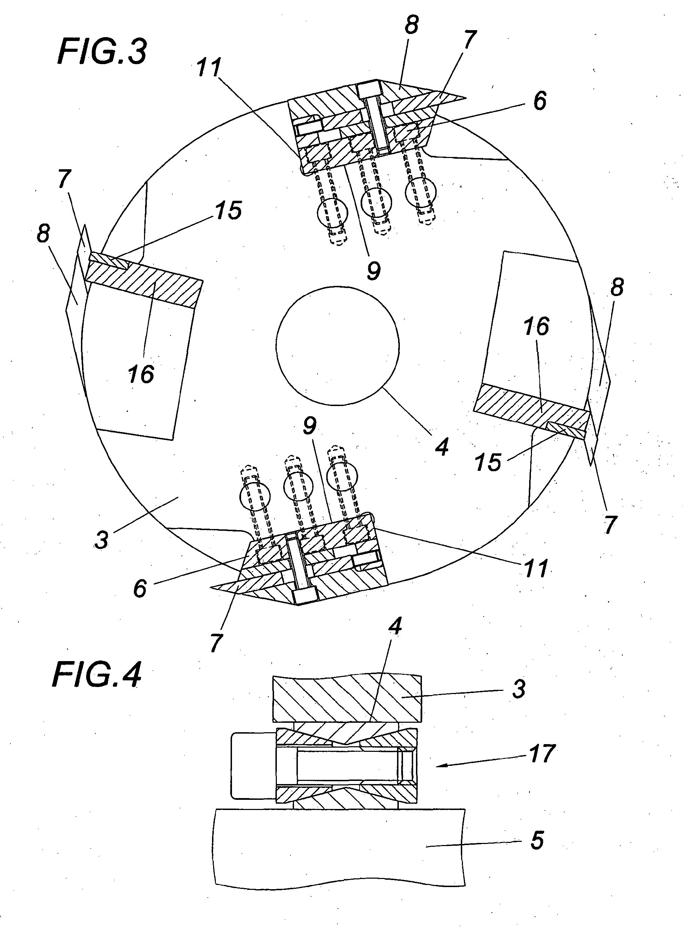

Die Messerträger 6 ruhen umfangsseitig an auf den Rotorscheiben 3 vorgesehenen Aufnahmen 9 auf und sind mit einer quer zur Aufnahme 9 ausgerichteten Befestigung, im Ausführungsbeispiel nach Fig. 2 und 3 je drei Schrauben je Rotorscheibe lösbar an den Rotorscheiben 3 befestigt, wobei die auf den Messerträgern 6 angeordneten Messer 7, die Befestigung des Messerträgers 3, also die Schrauben 10 zumindest teilweise überdecken. Insbesondere weisen die Messerträger 6 eine den äußeren Abstand zwischen zwei benachbarten Rotorscheiben 3 entsprechenden Abstand ebenso auf, wie die Messer 7. Dies bedeutet, dass die auf den Messerträgern 6 angeordneten Messer 7 die Befestigung des Messerträgers 6 zumindest in Rotorachsrichtung 2 vollständig überdecken.

Des Weiteren weisen die Rotorscheiben 3 aufnahmenrückseitig eine einen rückwärtigen Anschlag 11 für den Messerträger 6 ausbildende Schulter auf. Der Messerträger 6 stützt sich somit an der Schulter 11 ab, womit auf Messer 7 und Messerträger 6 einwirkende Schläge direkt in die Rotorscheibe 3 abgetragen werden können.

Die Befestigungsmittel sind wie bereits dargestellt in Sacklöcher 12 der Rotorscheiben 3 eingreifende Schrauben 10. Die Rotorscheiben 3 sind dabei mit quer zur Schraubenachse ausgerichteten, insbesondere parallel zur Rotorachsrichtung 2 ausgerichteten und die Sacklöcher 12 durchbrechenden Ausnehmungen 13, insbesondere Bohrungen versehen, in welche Ausnehmungen 13 Schraubenmuttern 14 mit zylindrischer Grundform lösbar eingesetzt sind. Dies hat insbesondere den Vorteil, dass gegebenenfalls abgerissene Befestigungsschrauben 10 durch Ausbohren der Schraubenmuttern 14 problemlos rasch ersetzt werden können, ohne eine Beschädigung des Gewindes befürchten zu müssen, da dieses ja durch eine neue Schraubenmutter ersetzt werden kann.

Des Weiteren sind zwischen die Rotorscheiben 3 zusätzlich als Gebläseschaufeln wirkende, mit Schlagleisten 15 ausgestattete Räumleisten 16 eingesetzt, die um den Verschleiß an den Rotorscheiben 3 zu vermindern mit in Rotorachsrichtung 2 anschließenden Messerträgern 6 fluchtend angeordnet sind, wobei die Räumleisten zudem radial über die Rotorscheiben 3 vorragen (Fig. 3).

Fig. 4 kann ein Beispiel für einen üblichen Klemmkeil-Spannsatz 17 entnommen werden, mit dem jede der Rotorscheiben 3 auf der Antriebswelle 5 drehfest gehalten ist.

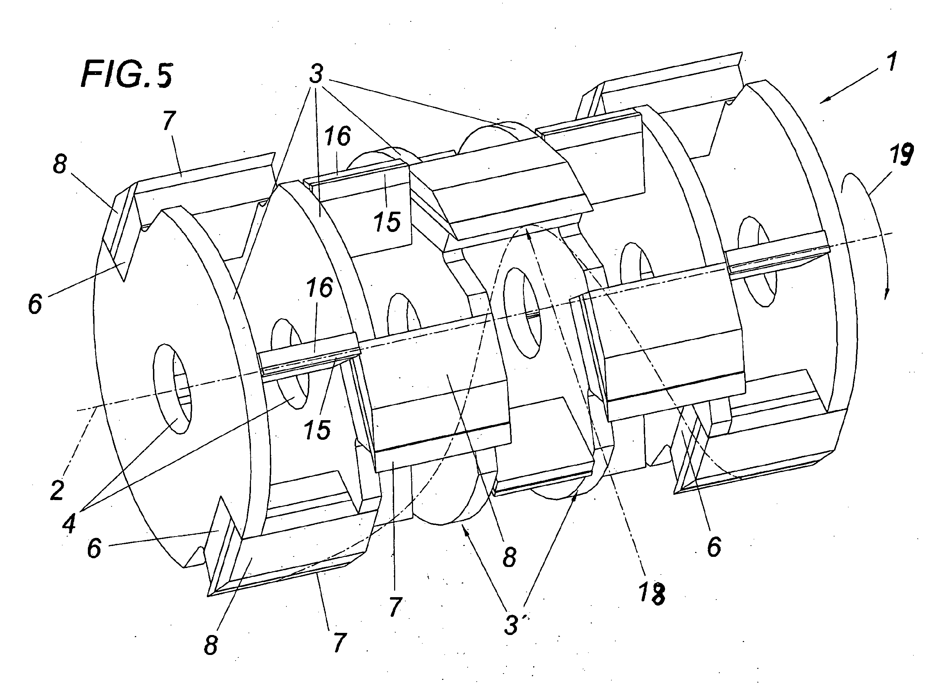

Insbesondere Fig. 5 kann entnommen werden, dass die zwischen je zwei Rotorscheiben 3 angeordneten Messerträger 6 und Messer 7 pfeilförmig auf dem Rotorumfangsmantel angeordnet sind, wobei die im Bereich der mittleren Rotorscheiben 3' vorgesehene Pfeilspitze 18 in Rotordrehrichtung 19 nacheilend ist. Im vorliegenden Beispiel sind zehn Messerträger und Messer zwischen sechs Rotorscheiben 3 angeordnet, wobei zwischen zwei Rotorscheiben je zwei Messerträger 6 und Messer 7 um 180° um die Rotorachse versetzt angeordnet sind. Des Weiteren sind die Messer 7 und Messerträger 6 benachbarter Segmente um jeweils 60° zueinander in Drehrichtung versetzt, wobei sich die benachbarten Messerträger 6 und Messer 7 zur Pfeilspitze ergänzen, welche Pfeilspitze 18 in Rotordrehrichtung 19 den anderen benachbarten Messerträgern und Messern nacheilt.

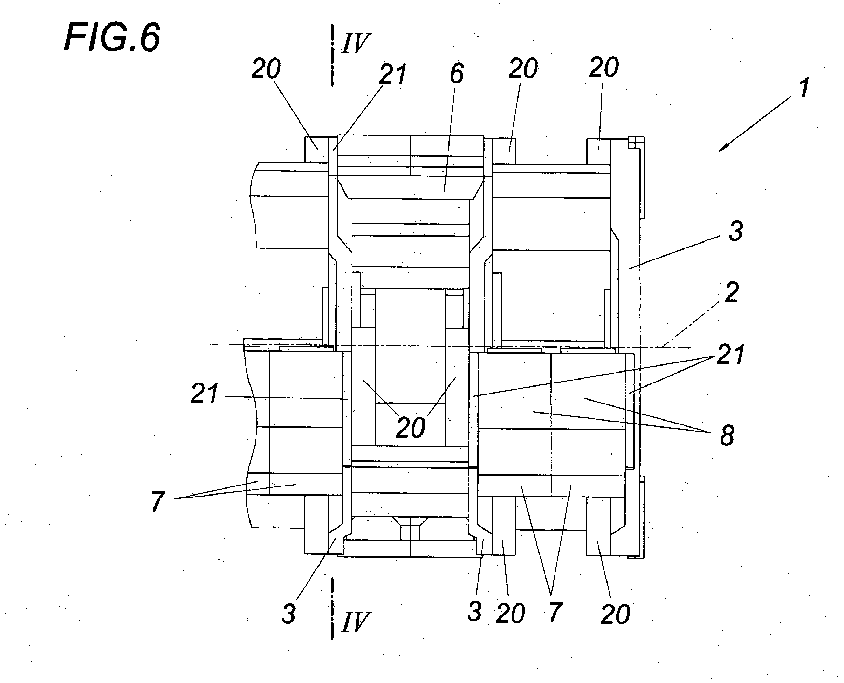

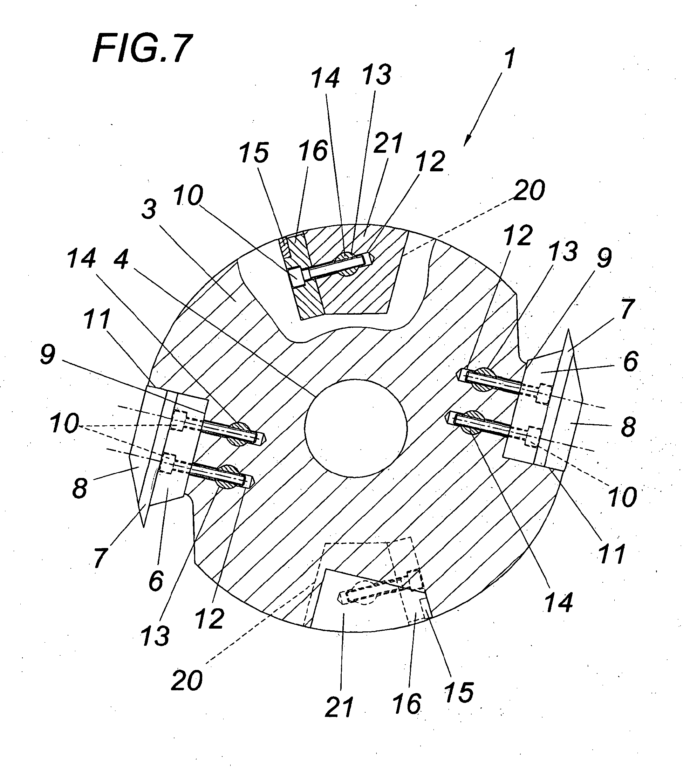

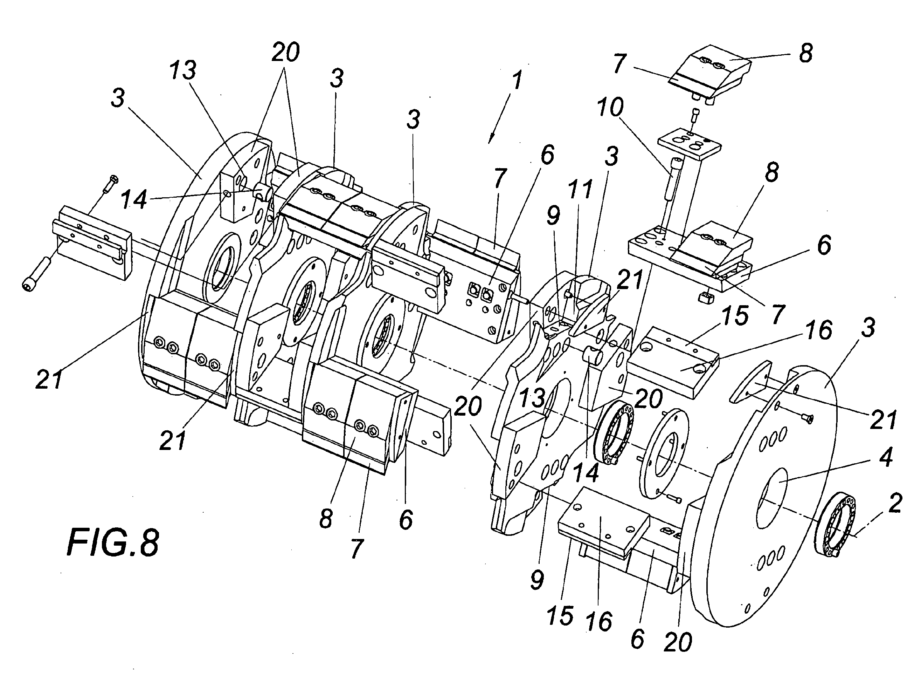

Gemäß dem Ausführungsbeispiel nach den Fig. 6 bis 8 greifen die Messerträger in wenigstens von Aufnahmen 9 und Schultern 11 aufgespannte axiale Durchbrechungen in den Rotorscheiben ein, in welche Durchbrechungen in axialer Richtung an die Messerträger 6 anschließende Distanzplatten 21 mit einer der Durchbrechung zumindest im wesentlichen entsprechenden Umfangsgeometrie eingesetzt sind. Die Distanzplatten 21 weisen dabei eine gegenüber den Rotorscheiben, vorzugsweise um wenigstens die Hälfte, geringere Dicke auf. Damit ergibt sich durch die Überdeckung benachbarten Segmenten zugeordneter Messer ein sauberer Schnitt ohne übermäßigen Verschleiß der Rotorscheiben zu verursachen.

Des weiteren ruhen die Räumleisten 16 auf Anschlagelementen 20 auf, die auf der einem benachbarten Messerträger abgewandten Scheibenfläche an der jeweiligen Rotorscheibe 3 angeordnet sind, wobei das jeweilige Anschlagelement 20 vorzugsweise zumindest einen Teil der daran anliegenden Distanzplatte 21 und einen Teil der daran anliegenden Scheibenfläche überdeckt.

## Patentansprüche

1. Vorrichtung zum Zerkleinern von Holz mit einem Rotor (1) mit wenigstens zwei in Rotorachsrichtung (2) beabstandeten und koaxial zueinander angeordneten Rotorscheiben (3), wobei zwischen je zwei Rotorscheiben (3) wenigstens ein lösbar an den Rotorscheiben (3) befestigter Messerträger (6) vorgesehen ist, auf dem wiederum wenigstens ein Messer (7) lösbar angeordnet ist, wobei der Messerträger (6) auf umfangsseitig auf den Rotorscheiben (3) vorgesehenen Aufnahmen (9) aufruht und mit quer zur Aufnahme (9) ausgerichteten Schrauben lösbar an den Rotorscheiben (3) befestigt ist und die auf dem Messerträger (6) angeordneten Messer (7) die Schrauben des Messerträgers (6) zumindest teilweise überdecken, wobei die Messerträger (6) ebenso wie die Messer (7) zumindest annähernd eine den äußeren Abstand zwischen zwei benachbarten Rotorscheiben (3) entsprechende Breite aufweisen, **dadurch gekennzeichnet, dass** die Schrauben (10) in Sacklöcher (12) der Rotorscheiben (3) eingreifen, und dass die Rotorscheiben (3) mit quer zur Schraubenachse ausgerichteten und die Sacklöcher (12) durchbrechenden Ausnehmungen (13) versehen sind, in welche Ausnehmungen (13) Schraubenmuttern (14) lösbar eingesetzt sind.

2. Vorrichtung nach Anspruch 1, **dadurch gekennzeichnet, dass** die Rotorscheiben (3) aufnahmenrückseitig eine einen rückwärtigen Anschlag (11) für den Messerträger (6) ausbildende Schulter (11) aufweisen.

3. Vorrichtung nach einem der Ansprüche 1 oder 2, **dadurch gekennzeichnet, dass** die auf den Messerträgern (6) angeordneten Messer (7) die Befestigung des Messträgers (6) vollständig überdecken.

4. Vorrichtung nach einem der Ansprüche 1 bis 3, **dadurch gekennzeichnet, dass** die Schraubenmuttern (14) eine zylindrische Grundform oder eine rechteckige Grundform mit gerundeten Kanten aufweisen.

5. Vorrichtung nach einem der Ansprüche 1 bis 4, **dadurch gekennzeichnet, dass** zwischen die Rotorscheiben (3) zusätzlich als Gebläseschaufeln wirkende, gegebenenfalls mit Schlagleisten (15) ausgestattete, Räumleisten (16) eingesetzt sind, die vorzugsweise mit in Rotorachsrichtung anschließenden Messerträgern (6) fluchtend ausgebildet sind.

6. Vorrichtung nach einem der Ansprüche 1 bis 5, **dadurch gekennzeichnet, dass** jede der Rotorscheiben (3) über je einen Klemmkeil-Spannsatz (17) auf einer Antriebswelle (5) drehfest gehalten ist.

7. Vorrichtung nach einem der Ansprüche 1 bis 6 mit mehreren in Rotorachsrichtung beabstandeten und koaxial zueinander angeordneten Rotorscheiben, **dadurch gekennzeichnet, dass** die zwischen je zwei Rotorscheiben (3) angeordneten Messerträger (6) und Messer (7) pfeilförmig auf dem Rotorumfangsmantel angeordnet sind, wobei die im Bereich der mittleren Rotorscheiben (3) vorgesehene Pfeilspitze (22) in Rotordrehrichtung nacheilend ist.

8. Vorrichtung nach Anspruch 7, **dadurch gekennzeichnet, dass** wenigstens fünf Messerträger (6) zwischen wenigstens sechs Rotorscheiben (3) angeordnet sind.

9. Vorrichtung nach einem der Ansprüche 7 oder 8, **dadurch gekennzeichnet, dass** am Rotorumfangsmantel wenigstens zwei in Rotorumfangsrichtung versetzt angeordnete pfeilförmige Reihen an Messerträgern (6) und Messern (7) vorgesehen sind.

10. Vorrichtung nach einem der Ansprüche 1 bis 9, **dadurch gekennzeichnet, dass** die Messerträger in wenigstens von Aufnahmen (9) und Schultern (11) aufgespannte axiale Durchbrechungen in den Rotorscheiben eingreifen, in welche Durchbrechungen in axialer Richtung an die Messerträger (6) anschließende Distanzplatten (18) mit einer der Durchbrechung zumindest im wesentlichen entsprechenden Umfangsgeometrie eingesetzt sind, wobei die Distanzplatten (18) eine gegenüber den Rotorscheiben, vorzugsweise um wenigstens die Hälfte, geringere Dicke aufweisen.

11. Vorrichtung nach Anspruch 10, **dadurch gekennzeichnet, dass** die Räumleisten (16) auf Anschlagelementen (17) aufruhen, die auf der einem benachbarten Messerträger abgewandten Scheibenfläche an der jeweiligen Rotorscheibe angeordnet sind, wobei das jeweilige Anschlagelement (17) vorzugsweise zumindest einen Teil der daran anliegenden Distanzplatte (18) und einen Teil der daran anliegenden Scheibenfläche überdeckt.

## Claims

1. Device for comminuting wood, having a rotor (1) with at least two rotor discs (3) which are spaced apart in the rotor axial direction (2) and are disposed coaxial with one another, wherein between each two rotor discs (3) at least one blade carrier (6) releasably attached to the rotor discs (3) is provided, on which blade carrier in turn at least one blade (7) is releasably disposed, wherein the blade carrier (6) rests on receivers (9) provided peripherally on the rotor discs (3) and is releasably attached to the rotor discs (3) by screws oriented transverse to the receiver (9), and the blades (7) disposed on the blade carrier (6) cover the screws of the blade carrier (6) at least partially, wherein the blade carriers (6) and the blades (7) are at least approximately of a width corresponding to the external spacing between two neighbouring rotor discs (3), **characterised in that** the screws (10) engage in blind holes (12) in the rotor discs (3) and that the rotor discs (3) are provided with apertures (13) which are oriented transverse to the screw axis and pass through the blind holes (12), into which apertures (13) nuts (14) are releasably inserted.

2. Device as claimed in claim 1, **characterised in that**, at the rear of the receivers, the rotor discs (3) have a shoulder (11) forming a rear stop (11) for the blade carrier (6).

3. Device as claimed in any one of claims 1 or 2, **characterised in that** the blades (7) disposed on the blade carriers (6) completely cover the fastening of the blade carrier (6).

4. Device as claimed in any one of claims 1 to 3, **characterised in that** the nuts (14) are basically cylindrical in shape or basically rectangular in shape with rounded edges.

5. Device as claimed in any one of claims 1 to 4, **characterised in that** between the rotor discs (3), spacer strips (16) are inserted, which additionally act as fan blades, are possibly fitted with impact strips (15) and are preferably formed flush with blade carriers (6) adjoining them in the rotor axial direction.

6. Device as claimed in any one of claims 1 to 5, **characterised in that** each of the rotor discs (3) is non-rotatably held on a drive shaft (5) via a respective clamping wedge mounting set (17).

7. Device as claimed in any one of claims 1 to 6, having a plurality of rotor discs which are spaced apart in the rotor axial direction and disposed coaxial with one another, **characterised in that** the blade carriers (6) and blades (7) disposed between every two rotor discs (3) are arranged in the form of an arrow on the rotor peripheral surface, wherein the arrow tip (22) provided in the region of the middle rotor discs (3) lags in the rotor rotational direction.

8. Device as claimed in claim 7, **characterised in that** at least five blade carriers (6) are disposed between at least six rotor discs (3).

9. Device as claimed in any one of claims 7 or 8, **characterised in that** on the rotor peripheral surface at least two arrow-shaped rows of blade carriers (6) and blades (7), which are offset in the rotor peripheral direction, are provided.

10. Device as claimed in any one of claims 1 to 9, **characterised in that** the blade carriers engage into axial orifices - which are clamped at least by receivers (9) and shoulders (11) - in the rotor discs, into which orifices, distancing plates (18), which adjoin the blade carriers (6) in the axial direction and have a peripheral geometry at least substantially corresponding to the orifice, are inserted, wherein the distancing plates (18) are thinner than the rotor discs, preferably by at least half.

11. Device as claimed in claim 10, **characterised in that** the spacing strips (16) rest on stop elements (17) which are disposed on the disc surface - facing away from a neighbouring blade carrier - on the respective rotor disc, wherein the respective stop element (17) preferably covers at least a part of the distancing plate (18) lying against it and a part of the disc surface lying against it.

## Revendications

1. Dispositif de broyage de bois avec un rotor (1), avec au moins deux disques de rotor (3) disposés coaxialement l'un par rapport à l'autre et espacés dans la direction de l'axe de rotor (2), au moins un porte-lames (6) fixé de façon amovible au niveau des disques de rotor (3) étant prévu entre chaque paire de disques de rotor (3), sur lequel au moins une lame (7) est à nouveau disposée de façon amovible, le porte-lames (6) reposant sur des logements (9) prévus côté périphérie sur les disques de rotor (3) et étant fixé de façon amovible au niveau des disques de rotor (3) avec des vis alignées transversalement au logement (9) et les lames (7) disposées sur le porte-lames (6) recouvrant au moins en partie les vis du porte-lames (6), les porte-lames (6) présentant tout comme les lames (7) au moins approximativement une largeur correspondant à l'espacement extérieur entre deux disques de rotor (3) contigus, **caractérisé en ce que** les vis (10) sont en prise dans des trous borgnes (12) des disques de rotor (3) et **en ce que** les disques de rotor (3) sont munis d'évidements (13) traversant les trous borgnes (12) et alignés transversalement à l'axe des vis, dans lesquels évidements (13) des écrous (14) sont insérés de manière amovible.

2. Dispositif selon la revendication 1, **caractérisé en ce que** les disques de rotor (3) présentent coté logement un épaulement (11) formant une butée (11) arrière pour le porte-lames (6).

3. Dispositif selon l'une des revendications 1 ou 2, **caractérisé en ce que** les lames (7) disposées sur les porte-lames (6) recouvrent entièrement la fixation du porte-lames (6).

4. Dispositif selon l'une des revendications 1 à 3, **caractérisé en ce que** les écrous (14) présentent une forme de base cylindrique ou une forme de base rectangulaire avec des bords arrondis.

5. Dispositif selon l'une des revendications 1 à 4, **caractérisé en ce que** des barres d'éjection (16), équipées le cas échéant de barres de percussion (15), agissant en plus en tant qu'aubes de soufflante sont insérées entre les disques de rotor (3), qui sont formées alignées de préférence avec des porte-lames (6) se raccordant dans la direction de l'axe du rotor.

6. Dispositif selon l'une des revendications 1 à 5, **caractérisé en ce que** chacun des disques de rotor (3) est maintenu bloqué en rotation par à chaque fois un jeu de serrage-cale de serrage (17) sur un arbre d'entraînement (5).

7. Dispositif selon l'une des revendications 1 à 6 avec plusieurs disques de rotor disposés coaxialement les uns par rapport aux autres et espacés dans la direction de l'axe de rotor, **caractérisé en ce que** les lames (7) et porte-lames (6) disposés entre chaque paire de disques de rotor (3) sont disposés en forme de flèche sur l'enveloppe périphérique du rotor, la pointe de flèche prévue dans la zone du disque de rotor (3) médian étant en retard dans le sens de rotation du rotor.

8. Dispositif selon la revendication 7, **caractérisé en ce qu'**au moins cinq porte-lames (6) sont disposés entre au moins six disques de rotor (3).

9. Dispositif selon l'une des revendications 7 ou 8, **caractérisé en ce qu'**au niveau de l'enveloppe périphérique du rotor, au moins deux rangées en forme de flèche, disposées décalées dans le sens périphérique du rotor, sont prévues au niveau des porte-lames (6) et lames (7).

10. Dispositif selon l'une des revendications 1 à 9, **caractérisé en ce que** les porte-lames sont en prise dans au moins des perforations axiales fixées par des logements (9) et épaulements (11), dans les disques de rotor, dans lesquelles perforations, des plaques intercalaires (18) reliées en direction axiale au niveau des porte-lames (6) sont insérées avec une géométrie périphérique correspondant essentiellement au moins à la perforation, les plaques intercalaires (18) présentant une épaisseur plus faible, de préférence au moins de la moitié, par rapport au disque de rotor.

11. Dispositif selon la revendication 10, **caractérisé en ce que** les barres d'éjection (16) reposent sur des éléments de butée (17) qui sont disposés sur la face de disque opposée à un porte-lames contigu, au niveau du disque de rotor respectif, chaque élément de butée (17) recouvrant de préférence au moins une partie de la plaque intercalaire (18) adjacente à celle-ci et une partie de la face de disque adjacente à celle-ci.
